# EUROPÄISCHE PATENTSCHRIFT

(11) **EP 2 978 091 B1**
(45) Veröffentlichungstag und Bekanntmachung des Hinweises auf die Patenterteilung: **01.04.2020**
(21) Anmeldenummer: 14306185.1
(22) Anmeldetag: 22.07.2014
(51) Int. Cl.: H02J 3/04, H02H 7/00

(54) **VERFAHREN ZUR ÜBERTRAGUNG ELEKTRISCHER ENERGIE**
METHOD FOR THE TRANSMISSION OF ELECTRIC POWER
PROCÉDÉ DE TRANSMISSION D'ÉNERGIE ÉLECTRIQUE

(43) Veröffentlichungstag der Anmeldung: 27.01.2016
(73) Patentinhaber: Nexans, 92400 Courbevoie (FR)
(72) Erfinder: Stemmle, Mark, 30625 Hannover (DE); West, Beate, 30169 Hannover (DE)
(74) Vertreter: Feray, Valérie

(56) Entgegenhaltungen:
- US-A1- 2008 191 561
- JUN YANG ET AL: "Development of a new protection device for high temperature superconducting power cable", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-5, XP031304237, ISBN: 978-1-4244-1905-0
- JAMES MAGUIRE ET AL: "Development and Demonstration of a Fault Current Limiting HTS Cable to be Installed in the Con Edison Grid", IEEE TRANSACTIONS ON APPLIED SUPERCONDUCTIVITY, IEEE SERVICE CENTER, LOS ALAMITOS, CA, US, Bd. 19, Nr. 3, 1. Juni 2009 (2009-06-01), Seiten 1740-1743, XP011261784, ISSN: 1051-8223

## Beschreibung

Die Erfindung bezieht sich auf ein Verfahren zur Übertragung von elektrischer Energie gemäß dem Oberbegriff des Patentanspruchs 1.

Supraleitende Kabelsysteme kommen beispielsweise zur Übertragung von elektrischer Energie in städtischen Stromnetzen zum Einsatz. Sie erlauben bei ausreichend tiefen Temperaturen, bei denen der Gleichstromwiderstand des Leiters Null ist, die nahezu verlustfreie Übertragung elektrischer Energie. Beispielsweise kann ein supraleitendes Kabelsystem in regionalen Transport- oder Verteilnetzen eingesetzt werden (beispielsweise bei einer Spannung von 110 kV), oder zur Verbindung von Umspannanlagen innerhalb eines innerstädtischen Verteilnetzes (beispielsweise bei einer Spannung von 10 kV). Ein supraleitendes Kabelsystem kann auch den Anschluß eines Verbrauchers mit einem städtischen Stromnetz verbinden.

Das supraleitende Kabelsystem besteht aus einem supraleitenden Kabel, welches zum Kühlen in einem Kryostat angeordnet ist. Der Kryostat weist mindestens ein thermisch isoliertes Rohr auf, durch welches ein zum Betrieb des supraleitenden Kabels geeignetes Kühlmittel, beispielsweise flüssiges Helium oder flüssiger Stickstoff, geleitet wird. Das isolierte Rohr besteht beispielsweise aus zwei konzentrisch angeordneten und auf Abstand gehaltenen Metallrohren, die eine Vakuumisolierung und andere Isoliermaterialien zwischen sich einschließen. An den Enden des supraleitenden Kabelsystems sind Endverschlüsse für den Anschluß an ein Stromnetz oder elektrische Anlagen festgelegt. Diese Endstücke sind mit einem Zugang für die Einspeisung des Kühlmittels aus einem Kühlmittelreservoir ausgerüstet. Die Enden des supraleitenden Kabelsystems sind jeweils mittels Leistungsschaltern sowie weiteren Elementen, beispielsweise Trennschaltern, mit Sammelschienen der Umspannanlagen oder mit anderen elektrischen Anlagen verbunden.

Die technischen Komponenten der elektrischen Anlagen sowie die elektrischen Leitungen zwischen den Anlagen sind meist redundant ausgelegt, um im Störungsfall, d.h. bei einem Ausfall oder Fehler einer der Komponenten, die Funktion des Energieübertragungssystems weiterhin zu gewährleisten und beispielsweise einen Stromausfall zu vermeiden. Neben dem supraleitenden Kabelsystem ist deshalb meist ein konventionelles, d.h. normalleitendes Kabelsystem vorhanden, welches ebenfalls mittels Leistungsschaltern und weiteren Elementen mit den Umspannanlagen verbunden ist. Das normalleitende Kabelsystem umfaßt beispielsweise ein oder mehrere konventionelle Kabel pro Phase in einem Dreiphasensystem. Im störungsfreien Betrieb können das supraleitende und das normalleitende Kabelsystem gleichzeitig parallel betrieben werden, sodaß bei einer Störung des einen Kabelsystems das jeweils andere Kabelsystem weiterarbeitet. Alternativ kann das normalleitende Kabelsystem im störungsfreien Betrieb abgeschaltet sein.

Die Funktion des supraleitenden Kabelsystems wird von einem Kontroll- bzw. Schutzsystem überwacht. Das Schutzsystem mißt beispielsweise die Stromstärke oder die Impedanz an einem oder an beiden Enden des supraleitenden Kabelsystems. Wird dabei eine Fehlfunktion festgestellt, wird das supraleitende Kabelsystem abgeschaltet. Falls das normalleitende Kabelsystem nicht mit dem supraleitenden Kabelsystems parallel betrieben wird, wird dieses anschließend zugeschaltet.

Im Falle des parallel betriebenen normalleitenden Kabelsystems wirkt sich nachteilig aus, daß immer auch Strom durch dieses fließt und es somit zu Verlusten kommt, welche die Gesamtsystemverluste erhöhen. Die Lebensdauer des normalleitenden Kabelsystems wird durch die permanente Zuschaltung verkürzt.

Im Falle des im störungsfreien Betrieb abgeschalteten normalleitenden Kabelsystems besteht der Nachteil, daß die Stromversorgung des Netzes nicht sichergestellt ist, nachdem das supraleitende Kabelsystem abgeschaltet und bevor das normalleitende Kabelsystem zugeschaltet wurde.

Aus der Druckschrift "Development of a new protection device for high temperature superconducting power cable", Power and Energy Society General Meeting - Conversion and Delivery of Electrical Energie in the 21 Century, 2000 IEEE, Seiten 1 bis 5 geht ein Netzwerk mit einem HTS-Kabel hervor, bei dem im Falle einer Störung desselben in einer ersten Variante eine parallel liegende "overhead line" in das Netzwerk eingeschaltet wird. Zu dem Aufbau der "overhead line" ist in der Druckschrift nichts erwähnt. In einer zweiten Variante wird erst die "overhead line" und erst danach das HTS-Kabel in das Netzwerk eingeschaltet. Die "overhead line" wird dann wieder abgeschaltet.

Der Erfindung liegt die Aufgabe zugrunde, das eingangs geschilderte Verfahren so zu gestalten, daß eine Versorgungsunterbrechung vermieden wird.

Diese Aufgabe wird entsprechend den kennzeichnenden Merkmalen des Patentanspruchs 1 gelöst.

Das Verfahren erlaubt eine effiziente Nutzung eines Übertragungssystems für elektrische Energie innerhalb eines Stromnetzes. Im störungsfreien Betrieb wird das normalleitende Kabelsystem durch die spannungsführende Verbindung nur durch Ladeströme belastet. Da dadurch keine nennenswerten Ströme fließen, treten nur geringe, vernachlässigbare Verluste durch die Spannungsbelastung auf. Die Gesamtverluste des Übertragungssystems werden dadurch erheblich verringert. Ebenso wird dadurch die Lebensdauer des normalleitenden Kabelsystems erhöht. Die von der Kontrolleinheit geregelte Beschaltungssequenz des Übertragungssystems stellt sicher, daß die verbundenen elektrischen Anlagen, beispielsweise Umspannanlagen, ohne Unterbrechung versorgt sind. Das normalleitende Kabelsystem wird im Falle eine Störung des supraleitenden Kabelsystems stets vor dem Abschalten desselben zugeschaltet. Dies wird durch eine entsprechende zeitliche Verzögerung zwischen dem Senden des ersten Signals und dem Senden des zweiten Signals erreicht. Die Kontrolleinheit kann beispielsweise zunächst das erste und dann zeitverzögert das zweite Signal zu den entsprechenden Leistungsschaltern senden. Alternativ kann eine Schaltsequenz, welche beide Signale enthält, auch einmalig zu den Leistungsschaltern gesendet werden, wobei das zweite Signal mit einer entsprechenden Verzögerung assoziiert ist.

Das erfindungsgemäße Verfahren sowie ein entsprechendes Übertragungssystem werden anhand der Zeichnungen erläutert. Es zeigen:
Fig. 1 in schematischer Darstellung ein System zur Übertragung elektrischer Energie und
Fig. 2 ein Ausführungsbeispiel eines erfindungsgemäßen Verfahrens zur Übertragung elektrischer Energie.

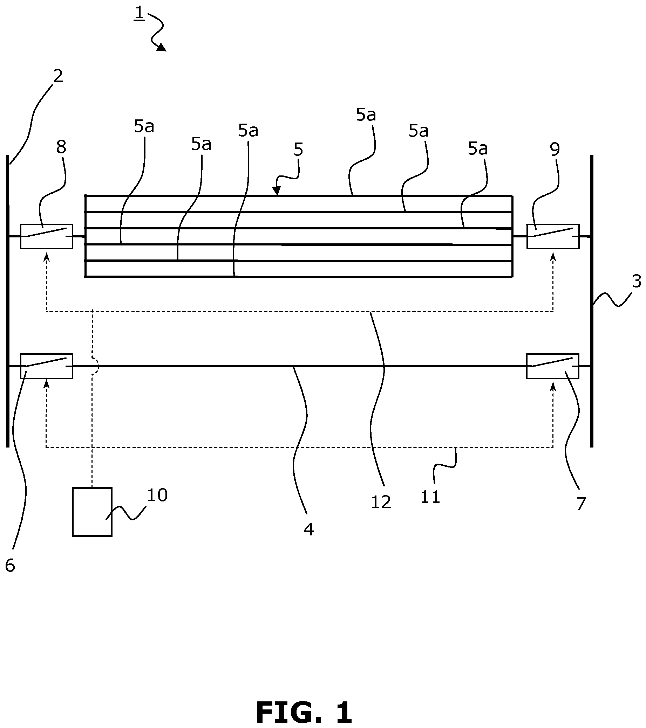

In Fig. 1 sind schematisch zwei Anschlußelemente 2, 3 von je einer elektrischen Anlage dargestellt, zwischen denen elektrische Energie mittels des Systems 1 übertragen werden soll. Die Anschlußelemente 2, 3 können beispielsweise Sammelschienen eines Drehstromsystems sein, die zu je einer Umspannanlage gehören. Ein supraleitfähiges Kabelsystem 4 verbindet die Anschlußelemente 2, 3 miteinander. Das supraleitfähige Kabelsystem 4 ist an seinen Enden jeweils mittels eines Leistungsschalters 6, 7 an eines der Anschlußelemente 2, 3 angeschlossen.

Parallel zu dem supraleitfähigen Kabelsystem 4 ist ein normalleitendes Kabelsystem 5 an seinen Enden jeweils mittels eines Leistungsschalters 8, 9 an eines der Anschlußelemente 2, 3 angeschlossen. Das normalleitende Kabelsystem 5 umfaßt mindestens ein normalleitendes Kabel 5a pro Phase, vorzugsweise jedoch mehrere normalleitende Kabel 5a pro Phase. In Fig. 1 sind zwei Kabel 5a pro Phase dargestellt.

Im störungsfreien Betrieb, d. h. im ordnungsgemäßen Betrieb des Übertragungssystems 1, dient nur das supraleitende Kabelsystem 4 der Stromleitung und somit der Energieübertragung. Das normalleitende Kabelsystem 5 ist nicht stromleitend. Die zu dem supraleitenden Kabelsystem 4 gehörigen Leistungsschalter 6, 7 sind geschlossen. Das normalleitende Kabelsystem 5 ist als redundantes System ausgelegt für den Fall, daß es in dem supraleitfähigen Kabelsystem 4 zu einer Störung kommt. Das normalleitende Kabelsystem 5 ist nur an einem Ende an eines der Anschlußelemente 2, 3 angeschlossen. Es besteht somit eine spannungsführende Verbindung zwischen einer der elektrischen Anlagen und dem normalleitenden Kabelsystem, aber keine stromführende Verbindung zwischen den beiden elektrischen Anlagen.

Eine Kontrolleinheit 10 überwacht die Funktion des supraleitfähigen Kabelsystems 4 und des normalleitenden Kabelsystems 5. Es handelt sich bei der Kontrolleinheit 10 um ein Schutzsystem, welches mit Vorteil durchgehend Messungen einer oder mehrerer der physikalischen Größen Stromstärke, Spannung und Impedanz an den Kabelsystemen 4, 5 vornimmt. Die Messungen können auch in regelmäßigen Abständen durchgeführt werden. Die Kontrolleinheit 10 ist geeignet, die Leistungsschalter 6-9 mittels Signalen zu steuern, d.h. zu schließen und zu öffnen.

Die Kontrolleinheit 10 kann aus einem Teil bestehen, wie in Fig. 1 dargestellt. In diesem Fall ist die Kontrolleinheit kommunikativ mit jedem der Leistungsschalter 6-9 verbunden. Die Kontrolleinheit 10 kann alternativ aus zwei Teilen bestehen, von denen jeweils eines mit einer der elektrischen Anlagen verknüpft ist. In diesem Fall ist ein Teil der Kontrolleinheit 10 mit jeweils den beiden zu einer elektrischen Anlage gehörigen Leistungsschaltern 6-9 kommunikativ verbunden. Die beiden Teile der Kontrolleinheit 10 wiederum können ebenfalls kommunikativ miteinander verbunden sein. Die Kontrolleinheit 10 kann weiterhin aus mehreren Teilen bestehen, von denen jeweils eines mit einem der Leistungsschalter verknüpft ist.

Nach einer alternativen Ausführungsform können das supraleitfähige Kabelsystem 4 und das normalleitende Kabelsystem 5 auch von je einem zugehörigen Schutzsystem überwacht werden. Diese beiden Schutzsysteme sind in diesem Fall kommunikativ zu einer Kontrolleinheit miteinander verbunden.

Im Betrieb des Energieübertragungssystems 1 wird die Funktion bzw. der einwandfreie Betrieb des supraleitenden Kabelsystems 4 von der Kontrolleinheit 10 überwacht, indem beispielsweise die Stromstärke an beiden Enden des supraleitenden Kabelsystems 4 gemessen wird und deren Werte verglichen werden (Differentialschutz). Im Falle einer Differenz kommt es zu einer Fehlermeldung. Die Stromstärke kann auch an nur einem Ende des supraleitenden Kabelsystems 4 gemessen werden um festzustellen, ob deren Wert zu hoch oder korrekt ist. Die Funktion des normalleitenden Kabelsystems 5 wird überwacht, indem die Spannung an dem einen angeschlossenen Ende des normalleitenden Kabelsystems 5 gemessen wird. So kann festgestellt werden, ob eines der Kabel beispielsweise von einem Straßenbaugerät zerrissen oder anderweitig beschädigt wurde.

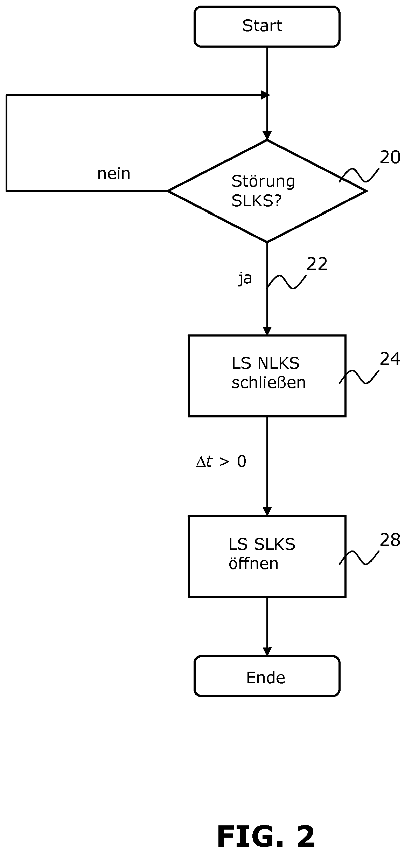

Ein Ausführungsbeispiel des erfindungsgemäßen Verfahrens ist in Fig. 2 schematisch als Ablaufplan dargestellt. Das Verfahren wird mit Hilfe des in Fig. 1 dargestellten Übertragungssystems 1 ausgeführt. Der Betrieb des supraleitenden Kabelsystems (SLKS) wird von der Kontrolleinheit 10 überwacht (Bezugszeichen 20). Wenn von derselben eine Fehlfunktion oder Störung des supraleitenden Kabelsystems 4 detektiert wird (Bezugszeichen 22), so muß dieses schnell vom Netz getrennt werden. Die Kontrolleinheit 10 generiert ein erstes Signal 12 (Bezugszeichen 24), mittels welchem der zweite der Leistungsschalter 8, 9 (LS) für den Anschluß des normalleitenden Kabelsystems 5 (NLKS) geschlossen wird. Die Verbindung zwischen den elektrischen Anlagen über das normalleitende Kabelsystem 5 ist nach dem Schließen des zweiten Leistungsschalters 8, 9 stromführend. Nach dem Senden des ersten Signals (Bezugszeichen 24) wird mittels eines korrespondierenden, zweiten Signals 11 (Bezugszeichen 28) mindestens einer der Leistungsschalter 6, 7, mit welchem das supraleitende System 4 an eine der elektrischen Anlagen angeschlossen ist, geöffnet, sodaß dasselbe von mindestens einer der elektrischen Anlagen abgeschaltet wird. Es besteht dann keine stromführende Verbindung über das supraleitende Kabelsystem 4 mehr. Vorzugsweise werden beide Leistungsschalter 6, 7 des supraleitenden Kabelsystems 4 geöffnet.

Da das supraleitfähige Kabelsystem 4 im Falle einer Störung möglichst schnell abgeschaltet werden muß, muß die beschriebene Schaltsequenz in Schnellzeit erfolgen. Der zeitliche Abstand (Δ*t*) zwischen dem Abschalten des supraleitenden Kabelsystems 4 und dem Zuschalten des normalleitenden Kabelsystems 5 beträgt wenige Millisekunden. Beispielsweise erfolgt das Signal 11 zum Abschalten des supraleitenden Kabelsystems 4 1 bis 20 ms nach dem Signal 12 zum Zuschalten des normalleitenden Kabelsystems 5. Dies kann dadurch erreicht werden, daß das zweite Signal 11 in entsprechendem zeitlichem Abstand nach dem Senden des ersten Signals 12 gesendet wird.

Betrifft die Störung das normalleitende Kabelsystem 5, wird mittels eines von der Kontrolleinheit generierten Signals der Leistungsschalter 8, 9, mit welchem das normalleitende System 5 an eine der elektrischen Anlagen angeschlossen ist, geöffnet. Das normalleitende Kabelsystem 5 ist dann komplett abgeschaltet und kann beispielsweise repariert werden, um die Fehlfunktion zu beheben.

## Patentansprüche

1. Verfahren zur Übertragung von elektrischer Energie, bei welchem zwischen zwei elektrischen Anlagen elektrischer Strom mittels eines supraleitfähigen Kabelsystems (4) übertragen wird, dessen beiden Enden jeweils stromführend an einer der elektrischen Anlagen angeschlossen sind, und bei welchem weiterhin ein normalleitendes Kabelsystem (5) parallel zu dem supraleitfähigen Kabelsystem (4) angeordnet wird, wobei die Funktion des supraleitfähigen Kabelsystems (4) von einer Kontrolleinheit (10) überwacht wird und wobei durch von der Kontrolleinheit (10) gesendete Signale das normalleitende Kabelsystem (5) dann an die beiden elektrischen Anlagen angeschlossen wird, wenn für das supraleitfähige Kabelsystem (4) eine Störung festgestellt wird, und mit zeitlichem Abstand danach das supraleitfähige System (4) von mindestens einer der elektrischen Anlagen abgeschaltet wird, **dadurch gekennzeichnet,**
- **daß** im Normalbetrieb nur ein Ende des normalleitenden Kabelsystems (5) spannungsführend mittels eines Leistungsschalters (8, 9) an eine der elektrischen Anlagen angeschlossen wird und
- **daß** im Fall einer Störung des supraleitfähigen Kabelsystems (4) durch ein erstes Signal (12) der Kontrolleinheit (10) das andere Ende des normalleitenden Kabelsystems (5) mittels eines zweiten der Leistungsschalter (8, 9) an die andere elektrische Anlage angeschlossen wird, so daß das normalleitende Kabelsystem (5) stromführend wird, bevor das supraleitfähige Kabelsystem (4) durch ein zweites Signal (11) der Kontrolleinheit (10) von der einen elektrischen Anlage abgeschaltet wird.

2. Verfahren nach Anspruch 1, **dadurch gekennzeichnet, daß** das erste und das zweite Signal (12,11) der Kontrolleinheit (10) mit einem zeitlichen Abstand von 1 ms bis 20 ms gesendet werden.

## Claims

1. A method for the transmission of electrical energy, in which electrical current is transmitted between two electrical installations by means of a superconductive cable system (4), the two ends of which in each case are connected in a current-carrying manner to one of the electrical installations, and in which, furthermore, a normal-conducting cable system (5) is arranged parallel to the superconductive cable system (4), wherein the function of the superconductive cable system (4) is monitored by a control unit (10) and wherein the normal-conducting cable system (5) is then connected to the two electrical installations by signals sent by the control unit (10), if a fault is found for the superconductive cable system (4), and at a time interval thereafter the superconductive system (4) is then disconnected from at least one of the electrical installations, **characterized in**
- **that** in the normal operation only one end of the normal-conducting cable system (5) is connected in a voltage-carrying manner by means of a circuit breaker (8, 9) to one of the electrical installations and
- **that** in the event of a fault of the superconductive cable system (4) due to a first signal (12) of the control unit (10) the other end of the normal-conducting cable system (5) is connected by means of a second of the circuit breakers (8, 9) to the other electrical installation, so that the normal-conducting cable system becomes current-carrying, before the superconductive cable system (4) is disconnected from the one electrical installation due to a second signal (11) of the control unit (10).

2. The method according to Claim 1, **characterized in that** the first and the second signal (12, 11) of the control unit (10) is sent at a time interval of 1 ms to 20 ms.

## Revendications

1. Procédé de transmission d'énergie électrique, dans lequel, entre deux installations électriques, un courant électrique est transmis au moyen d'un système de câbles supraconducteurs (4), dont les deux extrémités sont raccordées chacune, de façon à conduire un courant, à une des installations électriques et dans lequel, en outre, un système de câbles à conduction normale (5) est disposé parallèlement au système de câbles supraconducteurs (4), le fonctionnement du système de câbles supraconducteurs (4) étant surveillé par une unité de contrôle (10) et, grâce aux signaux envoyés par l'unité de contrôle (10), le système de câbles à conduction normale (5) est raccordé aux deux installations électriques lorsqu'une perturbation est constatée dans le système de câbles supraconducteurs (4) et, avec une temporisation, le système supraconducteur (4) est ensuite débranché d'au moins une des installations électriques, **caractérisé en ce que**
- en fonctionnement normal, seule une extrémité du système de câbles à conduction normale (5) est raccordée de manière à conduire une tension au moyen d'un disjoncteur (8, 9) à une des installations électriques et
- dans le cas d'une perturbation dans le système de câbles supraconducteurs (4), grâce à un premier signal (12) de l'unité de contrôle (10), l'autre extrémité du système de câbles à conduction normale (5) est raccordée au moyen d'un deuxième des disjoncteurs (8, 9) à l'autre installation électrique, de façon que le système de câbles à conduction normale (5) conduise le courant avant que le système de câbles supraconducteurs (4) ne soit débranché de l'installation électrique par un deuxième signal (11) de l'unité de contrôle (10).

2. Procédé selon la revendication 1, **caractérisé en ce que** les premier et deuxième signaux (12, 11) de l'unité de contrôle (10) sont émis avec une temporisation de 1 ms à 20 ms.
